# EUROPEAN PATENT APPLICATION

(11) **EP 3 360 854 A1**
(43) Date of publication of application: **15.08.2018**
(21) Application number: 17382067.1
(22) Date of filing: 10.02.2017
(51) Int. Cl.: C04B 28/04, C04B 7/02

(54) **ULTRA-FINE WHITE CEMENT COMPOSITION**

(71) Applicant: Holcim Technology Ltd., 8645 Jona (CH)
(72) Inventor: Carrión Gómez, Benito, 02210 Alcalá del Jucar-Albacete (ES); Navarro Gabaldón, Francisco, 46500 Sagunto (ES)
(74) Representative: Herrero & Asociados, S.L.

(57) **Abstract**

A cement composition comprises white ordinary Portland cement having a particle size distribution characterized by a D95 of between 10 and 20 micrometres and metakaolin.

## Description

The invention refers to a cement composition for producing white mortar or white concrete.

White mortar and white concrete are used for specific constructional applications, such as for prestige construction projects and for decorative work. White mortar is also used for tile grout. Further, white cement is useful in combination with inorganic pigments to produce brightly coloured concretes and mortars. In contrast, ordinary grey cement, when used with pigments, produces colours that may be less bright and less attractive.

Ordinary white Portland cement can be used to make white mortar or white concrete, but the degree of whiteness of the resulting products is not very high. Efflorescence is then clearly noticeable as the salts migrating to the surface are in most case white, and the final aspect of the product is deteriorated. Furthermore, the degree of whiteness of such products often varies slightly if there are small changes of the clinker composition or mineralogy.

White aluminate cement, such as the product Ternal® White distributed by Kerneos SA, is often used in mortar formulations, such as for producing white mortar tile adhesives for natural stones, tile grouts and floor decorative levelling compounds. It is also widely used in decorative renders. White aluminate cements can also be mixed with ordinary Portland cement and a source of calcium sulphate. These types of binders are more expensive than ordinary Portland cements (OPC), and have the advantage of a well-controlled whiteness, a very fast setting and strength acquisition, minimise efflorescence, and reduce and control shrinkage.

Efflorescence is a surface defect of mortar and concrete, which may create an undesirable appearance. It is a crystalline deposit of salts (carbonates, sulphates, chlorides, in particular carbonates of calcium, sodium and potassium), that forms on or near the surface of mortar and concrete. Generally, efflorescence results from the interactions of water, which migrates through the concrete and subsequently evaporates from its surface, with salts and carbon dioxide and other atmospheric gases. Iron oxides from the concrete can give the efflorescence a yellow/brown tint.

White aluminate cement has non-efflorescence properties due to an alkali content of less than 0.5% and due to a content of lime hydration products of less than 0.5%.

It is an object of the invention to provide a white cement composition that may be produced at a lower cost than white aluminate cements, but that has the same advantageous properties in application, such as a high and higher reproducible whiteness, fast setting properties and reduction of visible efflorescence.

In order to solve these objects, the invention provides a cement composition comprising white ordinary Portland cement having a particle size distribution characterized by a D95 of between 10 and 20 micrometres, preferably between 13 and 18 micrometres. The D95 is defined as the particle size that splits the sample into two fractions by weight of 95% and 5%. That is to say, a D95 of 18 microns implies that 95 wt.-% of the particles in the sample have a diameter of less than 18 microns. It is measured by laser diffraction particle size analyser, according to the method described in the International Standard ISO 13320:2009 (2009).

Thus, the cement composition of the invention is based on a white ordinary Portland cement instead of white aluminate cement, so that it can be produced in large quantities at a lower cost and with a controlled quality, in particular with respect to the whiteness. Fast setting properties are achieved due to the fine particle size of the white ordinary Portland cement being in the range of a D95 between 10 and 20 micrometres, preferably between 13 and 18 micrometre. In particular, the fast setting properties that may be achieved are similar to those to be obtained with binders that are based on aluminate cement. Further, efflorescence, can reliably be reduced or even prevented due to the addition of metakaolin.

In particular, it has be observed that choosing a D95 between 10 and 20 micrometres, preferably between 13 and 18 micrometres, for the white ordinary Portland cement does not only reduce the setting time of the binder, but also reduces the occurrence of efflorescence, which can be explained with the fact that the use of such finely ground white ordinary Portland cement reduces the porosity of the mortar or the concrete. Due to the low porosity the amount of residual water migrating through the concrete and subsequently evaporating from its surface is greatly reduced.

In addition to the above properties, which are similar to those obtainable with white aluminate cements, the cement composition of the invention allows for a higher final strength of the mortar or concrete in application.

White ordinary Portland cement is produced by a similar process as the usual grey ordinary Portland cement. However, the raw material mix is carefully chosen so as to minimize as far as possible the presence of compounds that have a colouring effect, such as chromium, manganese, iron, copper, vanadium, nickel and titanium. Typically, the raw material mix used for producing grey ordinary Portland cement comprises limestone and clay. Limestone used in cement manufacture usually contains up to 1 wt.-% Fe₂O₃, which is one of the main elements giving the clinker a brown/grey colour. Therefore, according to a preferred embodiment of the invention, the white ordinary Portland cement comprises < 0.5 wt.-%, preferably < 0.2 wt.-% Fe₂O₃.

Further, the white ordinary Portland cement used in the cement composition of the invention preferably comprises < 0.005 wt.-% Cr₂O₃ and < 0.05 wt.-% Mn₂O₃.

Typical clays used in grey cement raw material mix may contain 5-15 wt.-% Fe₂O₃. In order to minimize the presence of Fe₂O₃ in the raw material used for producing the white ordinary Portland cement, clays are preferably replaced with kaolin. Therefore a preferred embodiment of the invention provides that the white clinker is produced from a raw meal comprising limestone, kaolin and optionally kaolin washer sludge.

The use of such a raw material mix allows for the production of white clinker in a rotary kiln, wherein the rotary kiln is preferably operated at a peak temperature of above 1300°C, in particular at a peak temperature of 1450-1500°C.

Further, the white ordinary Portland cement, in addition to white clinker, preferably comprises gypsum, wherein gypsum is preferably present in an amount of 3-5 wt.-% based on the total weight of the white ordinary Portland cement.

Preferably, the whiteness of the white ordinary Portland cement corresponds to a reflectance value (L*a*b L-value) of > 80%, in particular > 85%. L*a*b refers to the Lab colour space, wherein the dimensions L represents the lightness dimension of this colour space.

The amount of metakaolin contained in the inventive cement composition can be chosen to minimize as far as possible the occurrence of efflorescence. In this connection, tests have revealed that the optimal results may be achieved, if metakaolin is present in an amount of 5-15 wt.-%, in particular 9 wt.-%, based on the total weight of the cement composition.

Preferably, the metakaolin contained in the inventive cement composition has a particle size distribution characterized by a D95 between 10 and 20 micrometres, more preferably 10 and 16 micrometres. Metakaolins of all mineralogical and chemical compositions are suitable for this invention.

The cement composition of the invention preferably does not contain any substantial amount of additional components besides its main components, which are white ordinary Portland cement and metakaolin. Therefore, a preferred embodiment of the invention provides that the white ordinary Portland cement is present in an amount of > 85 wt.-% based on the total weight of the cement composition.

In another embodiment, the cement composition may also comprise an organic poly-carboxylate ether water reducer, or a polynaphthalene sulfonate based water reducer. In a preferred embodiment, the water reducer is a poly-carboxylate ether water reducer, and is added to the binder during its manufacturing, when the components are blended together, and prior to the preparation of the mortar.

According to a further aspect, the invention refers to a mortar composition comprising the inventive cement composition, limestone filler, sand (in particular silica sand) and water. The mortar may be used for various purposes, such as for repair mortar compositions or for tile grout mortar compositions.

Depending on the desired properties the mortar may further comprise a polycarboxylate ether based superplasticizer, a calcium sulfoaluminate cement, an oleate water proofing agent, an vinyl acetate-ethylene copolymer resin, cellulose ether, a defoaming agent and/or reinforcement fibers.

Preferably, the 1d-compressive strength of the mortar is > 10 N/mm², preferably > 15 N/mm², more preferably > 20 N/mm².

Preferably, the 28d-compressive strength of the mortar is > 30 N/mm², preferably > 45 N/mm², more preferably > 50 N/mm².

The invention will now be described by reference to the following non limitative examples.

For producing a white ordinary Portland cement a raw mix was used that was made of three raw materials: limestone, kaolin and kaolin washer sludge. After a first step of crushing and milling, the raw meal was sent to a silo, from which it was fed to a rotary kiln, in which white clinker was produced.

The white clinker was produced by sintering of the raw meal (fused together without melting to the point of liquefaction) in the rotary kiln at temperatures above 1300°C. The hot clinker freshly produced was quenched in water.

Thereafter, micro-cement was produced by grinding the white clinker together with gypsum to a D95 of 16 micrometres. Gypsum was added to the white clinker in an amount of 3-5 wt.-% based on the total weight of the white ordinary Portland cement thereby obtained. A ball mill was used for the grinding step.

The white micro-cement obtained by the process as described above was stored in a silo. Metakaolin was stored in a separate silo. The superplasticizer was stored in a tank. In a blending facility, these three components were blended in batches, with a micro-cement:metakaolin weight-proportion of approximately 9:1 and a dosage of superplasticizer of 0.14 wt.-% of the total cement composition, in order to obtain the white cement composition of the invention. The freshly produced white cement composition was controlled and stored in a silo at the blending facility, from which it was bagged.

### Example 1 - One coat render compositions:

This example compares the performance of two mortars: a reference one coat render mortar (mortar A) and an embodiment of the instant invention, where a white aluminate cement (CAC white) is replaced by an ultra-fine cement composition (mortar B).

**Table 1: Mortar compositions for one coat render applications**

| Component | Mortar A (g) | Mortar B (g) |
|---|---|---|
| Ultra-fine cement (OPC with a D95 of 17 µm) (g) | 0 | 127 |
| Metakaolin | 0 | 13 |
| Superplasticizer | 0 | 0.14 |
| Ternal White | 140 | 0 |
| Dust Marble | 553 | 553 |
| Sand | 200 | 200 |
| Cellulose Ether | 1.0 | 1.0 |
| Air-entraining agent | 0.12 | 0.12 |
| Redispersible agent | 5.0 | 5.0 |
| Starch Ether | 0.3 | 0.3 |
| Waterproof | 2.4 | 2.4 |

In the compositions listed in table 1, the superplasticizer is the product ViscoCrete® 225 P, which is a polycarboxylate ether based superplasticizer supplied by Sika. Ternal® White is a calcium aluminate cement supplied by Kerneos. Dust Marble is a fine aggregate 0-1 mm from Holcim. Sand is a 1-2 mm aggregate from Holcim. Cellulose ether is Walocel 15.000 PP30 a hydroxyethyl methyl cellulose supplied by Dow. Air-entraining agent is Berolan LP-W1 (sodium lauryl sulphate) supplied by Berolan Gmbh. The redispersable agent is a vinyl-acetate latex powder supplied by Dow. Starch ether is "opagel CMT" supplied by Avebe."HISA A 2388 N" is an oleate water proofing agent supplied by Grupo ADI.

**Table 2: performance of the mortars of table 1**

| EN 998-1 | Mortar A | Mortar B |
|---|---|---|
| Mix Water, % | 23.5 | 18.5 |
| Flow table Consistency, mm | 165 | 160 |
| Air, % | 25 | 21 |
| Pot life, min | 280 | 230 |
| Adhesion, N/mm² | 0.29 | 1.06 |
| Flexural Strength, N/mm² | 1.67 | 3.29 |
| Compressive Strength, N/mm² | 5.95 | 14.69 |
| Shrinkage, mm/m | 0.66 | 0.8 |
| Capillarity, kg/m2*min^0,5 | 0.06 | 0.022 |

### Example 2 - Normalized mortar compositions:

The mortars compositions detailed in table 3 were prepared, and their respective efflorescence was measured in laboratory conditions. An efflorescence score of 0 and 1 is considered to be low and acceptable for the intended applications. The water content of the mortars was adjusted so that the flowability of the fresh mortar is 175 mm, when measured in a steel flow table test, as described in the standard 1015-3, published in 1999.

**Table 3: Normalized mortar compositions**

| Sample no. | 1 Ref | 2 | 3 | 4 | 5 | 6 | 7 | 8 | 9 | 10 | 11 |
|---|---|---|---|---|---|---|---|---|---|---|---|
| Ternal White (g) | 450 | 0 | 0 | 0 | 0 | 450 | 0 | 0 | 450 | 0 | 0 |
| Ultra-fine cement (OPC with a D95 of 17 µm) (g) | 0 | 409 | 409 | 429 | 391 | 0 | 409 | 409 | 0 | 409 | 409 |
| Metakaolin (g) | 0 | 41 | 41 | 21 | 59 | 0 | 41 | 41 | 0 | 41 | 41 |
| Sand (g) | 1350 | 1350 | 1350 | 1350 | 1350 | 1350 | 1350 | 1350 | 1350 | 1350 | 1350 |
| Viscocrete 225P (g) | 0 | 0 | 0,4 | 0,4 | 0,4 | 0 | 0 | 0,4 | 0 | 0 | 0,4 |
| DLP2000 (g) | 0 | 0 | 0 | 0 | 0 | 36 | 36 | 36 | 36 | 36 | 36 |
| HISA A 2388 N (g) | 0 | 0 | 0 | 0 | 0 | 2,4 | 2,4 | 2,4 | 0 | 0 | 0 |
| Water (g) | 550 | 590 | 540 | 470 | 540 | 450 | 540 | 490 | 405 | 560 | 510 |
| Flow (mm) | 175 | 175 | 175 | 175 | 175 | 175 | 175 | 175 | 175 | 175 | 175 |

**Table 4: Efflorescence results after 3 and 7 days of the mortars given in table 3.**

| Sample no. | 1 | 2 | 3 | 4 | 5 | 6 | 7 | 8 | 9 | 10 | 11 |
|---|---|---|---|---|---|---|---|---|---|---|---|
| Eff. after 3 days | 3 | 0 | 1 | 0 | 0 | 2 | 1 | 2 | 3 | 2 | 1 |
| Eff. after 7 days | 3 | 1 | 1 | 0 | 1 | 3 | 2 | 2 | 3 | 2 | 1 |

In the compositions listed in table 3, "HISA A 2388 N" is an oleate water proofing agent supplied by Grupo ADI and "DLP2000" is a vinyl acetate-ethylene copolymer resin powder supplied by The Dow Chemical Company.

Sample 1 is the reference mortar composition, which uses Ternal® White (a white aluminate cement supplied by Kerneos SA) as the only binder, and the efflorescence measured at 3 and 7 days is significant.

When Ternal® White is replaced by the white ordinary Portland cement of the invention and metakaolin (sample 2), the efflorescence is significantly reduced. This performance is confirmed when a water reducer (ViscoCrete® 225P) is added (sample 3). Samples 4 and 5 show that low efflorescence is achieved at different metakaolin contents. It can also be noticed that increasing the metakaolin content slightly increases the efflorescence, wherein the optimal ratio of white OPC and metakaolin is 9:1. Samples 6, 7 and 8 show that the combined use of a copolymer resin (DLP2000) and HISA tends to increase efflorescence. Samples 9, 10 and 11 demonstrate that the addition of the copolymer (DLP2000) alone increases the efflorescence.

This performance shows that the composition of sample 2 is preferred.

**Table 5: Scale used to assess the level of efflorescence**

| | |
|---|---|
| 0 | no efflorescence visible |
| 1 | traces of efflorescence |
| 2 | visible efflorescence |
| 3 | high efflorescence |

### Example 3 - Tile grout mortar compositions:

This example illustrates the performance of the inventive cement composition in tile grout mortar compositions, compared to a reference mortar (sample 1) using Ternal® White as the only binder. The binder of the composition (Samples 2 and 3) has a reduced efflorescence.

**Table 6: Tile grout mortar compositions.**

| Sample | 1 | 2 | 3 |
|---|---|---|---|
| Ternal® white (g) | 400 | 0 | 0 |
| Ultra-fine cement (OPC with a D95 of 17 µm) (g) | 0 | 364 | 364 |
| Limestone filler (g) | 250 | 250 | 250 |
| Siliceous sand (0-0.3mm) (g) | 340 | 340 | 340 |
| DLP2000 (g) | 10 | 10 | 10 |
| Walocel 15000 PP30 (g) | 0,8 | 0,8 | 0,8 |
| Retarders, accelerators (g) | 0,3 | 0,3 | 0,3 |
| Hydrofuge (g) | 3 | 3 | 3 |
| Metakaolin (g) | 0 | 36 | 36 |
| Viscocrete 225 P (g) | 0 | 0 | 0,4 |
| Water (g) | 31 | 35 | 32 |

**Table 7: Compressive strength of the mortar compositions given in table 6**

| Sample | 1 | 2 | 3 |
|---|---|---|---|
| Consistency (mm) | Not measured | 173 | 175 |
| Compr. strength at 4 hours (N/mm²) | Not measured | 1.9 | 0.7 |
| Compr. strength at 6 hours (N/mm²) | Not measured | 5.3 | 5.6 |
| Compr. strength at 8 hours (N/mm²) | Not measured | 7.6 | 6.4 |
| Compr. strength at 24 hours (N/mm²) | Not measured | 11.5 | 11.9 |
| Compr. strength at 7 days (N/mm²) | Not measured | 27.0 | 28.9 |
| Compr. strength at 28 days (N/mm²) | Not measured | 30.2 | 32.3 |

**Table 8: Efflorescence results of the mortar compositions given in table 6**

| Sample | 1 | 2 | 3 |
|---|---|---|---|
| Eff. after 3 days | 3 | 2 | 2 |
| Eff. after 7 days | 3 | 2 | 2 |

## Claims

1. Cement composition comprising white ordinary Portland cement having a particle size distribution **characterized by** a D95 of between 10 and 20 micrometres, preferably between 13 and 18 micrometres, and metakaolin.

2. Cement composition according to claim 1, wherein the white ordinary Portland cement comprises white clinker and gypsum, wherein gypsum is preferably present in an amount of 3-5 wt.-% based on the total weight of the white ordinary Portland cement.

3. Cement composition according to claim 1 or 2, wherein the white Portland cement comprises < 0.5 wt.-%, preferably < 0.35 wt.-% Fe₂O₃, more preferably < 0.2 wt.-% Fe₂O₃.

4. Cement composition according to claim 1, 2 or 3, wherein the white Portland cement comprises < 0.005 wt.-% Cr₂O₃ and < 0.05 wt.-% Mn₂O₃.

5. Cement composition according to any one of claims 1 to 4, wherein the white clinker is produced from a raw meal comprising limestone, kaolin and optionally kaolin washer sludge.

6. Cement composition according to any one of claims 1 to 5, wherein the whiteness of the white ordinary Portland cement corresponds to a reflectance value (L*a*b L-value) of > 80%, in particular > 85%.

7. Cement composition according to any one of claims 1 to 6, wherein metakaolin has a particle size distribution **characterized by** a D95 of between 10 and 20 micrometres, preferably 10 and 16 micrometres.

8. Cement composition according to any one of claims 1 to 7, wherein metakaolin is present in an amount of 5-15 wt.-%, in particular 9 wt.-%, based on the total weight of the cement composition.

9. Cement composition according to any one of claims 1 to 8, wherein the white ordinary Portland cement is present in an amount of > 85 wt.-% based on the total weight of the cement composition.

10. Cement composition according to any one of claims 1 to 9, further comprising a polycarboxylate ether based superplasticizer, added before or during the blending of the cement components.

11. Mortar composition comprising a cement composition according to any one of claims 1 to 10, limestone filler, sand and water.

12. Mortar composition according to claim 11, further comprising a polycarboxylate ether based super-plasticizer, a calcium sulfoaluminate cement, an oleate water proofing agent, an vinyl acetate-ethylene copolymer resin, cellulose ether, a defoaming agent and/or reinforcement fibers.

13. Mortar composition according to claim 11 or 12, wherein the sand is silica sand.

14. Mortar composition according to claim 11, 12 or 13, wherein the 1d-compressive strength of the mortar is > 10 N/mm², preferably > 15 N/mm², more preferably > 20 N/mm².

15. Mortar composition according to any one of claims 11 to 14, wherein the 28d-compressive strength of the mortar is > 30 N/mm², preferably > 45 N/mm², more preferably > 50 N/mm².
